# EUROPEAN PATENT APPLICATION

(11) **EP 2 541 857 A1**
(43) Date of publication of application: **02.01.2013**
(21) Application number: 11290303.4
(22) Date of filing: 30.06.2011
(51) Int. Cl.: H04L 12/58, G06Q 10/00

(54) **Method to forbid an email from being forwarded or repleid to all**

(71) Applicant: Alcatel Lucent, 75007 Paris (FR)
(72) Inventor: The designation of the inventor has not yet been filed
(74) Representative: Shamsaei Far, Hassan

(57) **Abstract**

A method of automatically forbidding an electronic message sent by a user to recipients of said electronic message from being forwarded or replied to all recipients, said user and recipients being connected to a communication network through an electronic message server, said user using a software application managing electronic messages, said software application providing to the user a communication media, the method comprising the steps of,
- Displaying, by the electronic message User Agent of the software, of a button in order to activate the do not forward or do not reply all features,
- Adding, by the electronic message User Agent of the software, of an information related to the do not forward or do not reply all features, in the header of the electronic message,
- Sending, by the Mail Transfer Agent of the software, of the electronic message to the Mail Delivery Agent of the software
- If a recipient requests to forward or reply to all other recipients, the Mail Transfer Agent rejects the request of the recipient.

## Description

### Field of the Invention

The invention relates to a method to forbid an email from being forwarded or replied to all.

### Background

When somebody sends an email to a contact or group of contacts, the sender may would like this email not to be forwarded to any other persons.

To inform his contacts that the email must not be forwarded, the sender usually enrich the title of the email with some text. For example : [DO NOT FORWARD]

But of course, as it is up to the recipients not forward the email, the sender has no guaranty that his email is not forwarded.

Another case is the 'reply' one.

When a sofware sends an email, the message of the email often says 'please do not reply'.

If the recipient does not read carefully the email, he may still reply to it.

One solution to solve these problems is to add controls in the client application (mailer).

This solution is not good enough because the recipient can still forward the email.

We propose a method to forbid an email from being forwarded or replied to all.

Further developments of the invention can be gathered from the following description.

In the following the invention will be explained further making reference to the attached drawing.

### Brief Description of the Figures

Fig. 1 shows a drawing depicting a method according to a first embodiment of the invention.
Fig. 2 shows a drawing depicting a method according to a second embodiment of the invention.

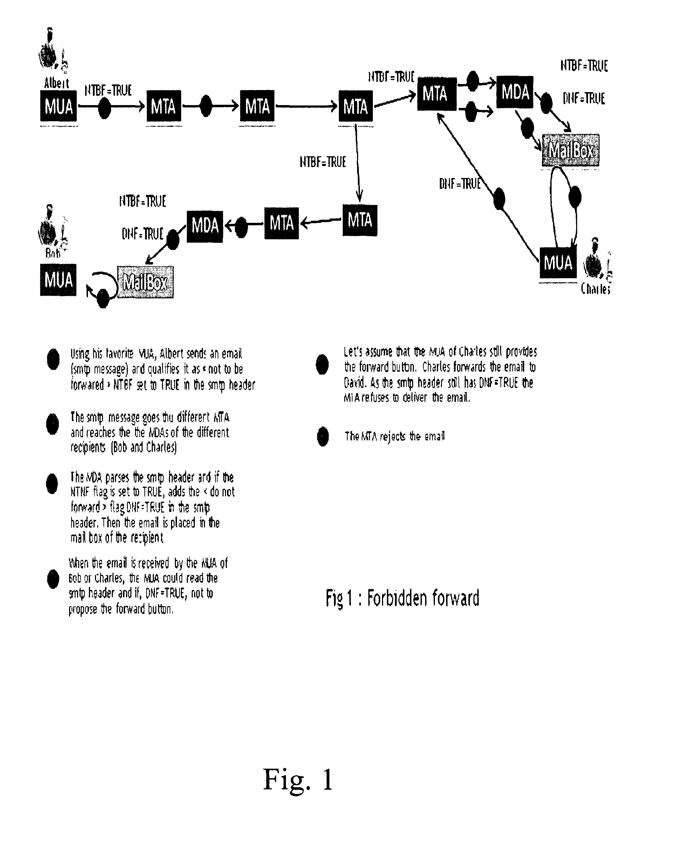

The invention, referring to figure 1, teaches a method to forbid an email from being forwarded to all.

The method teaches how to enrich the SMTP protocol so that the "Do Not Forward" information would be present in the SMTP message itself. New header tags are defined for this purpose.

The MUA (Mail User Agent) could then display some buttons in order to activate the DNF (do not forward) or DNRA (do not reply all) features.

The MUA would add the information in the SMTP header and send the message to the MTA (Mail Transfer Agent). The MTA transfers the message to the MDA (Mail Delivery Agent).

If the recipient tries to forward (reply to all), the MTA will reject the request.

At this stage, the MUA could also not provide the 'forward' and 'reply' feature for such a received message.

But it is not enough; the control must also be done in MTA.

If the MUA of Albert is compliant with this 'do not forward feature'.

A thunderbird plug-in could be designed for that.

A new option is proposed in the MUA so that Albert can indicate that the email he is about to send must not be forwarded to anybody.

The MUA adds a dedicated tag in the header of the SMTP message (1).

This tag indicates that the email is a "not to be forwarded" email (NTBF=TRUE).

The MUA sends the message to the MTA.

The MTA ignores the NTBF tag and does its normal job (2).

The message is transferred to the correct MDAs.

The MDA has then a specific role to render the feature. It has to parse the SMTP header and if the NTBF tag is set to true, it has to add another tag in the header and deposit the email in the recipient's mailbox (3).

The new tag indicates that the email must not be forwarded. DNF=TRUE (do not forward).

If the MUA of the recipient is compliant with the 'do not forward feature' we could imagine that this MUA parses the SMTP header and, when detecting that DNF=TRUE, does not propose the 'forward' button.

On the other hand, there is no guaranty that the MUA supports the feature and let's imagine that the recipient decides to forward the received email (5).

In this case the MTA receives the email and checks the value of the DNF header tag. If DNF=TRUE, it is up to the MTA to refuse to transfer the email.

The MTA sends back an email to notify about the reject (6).

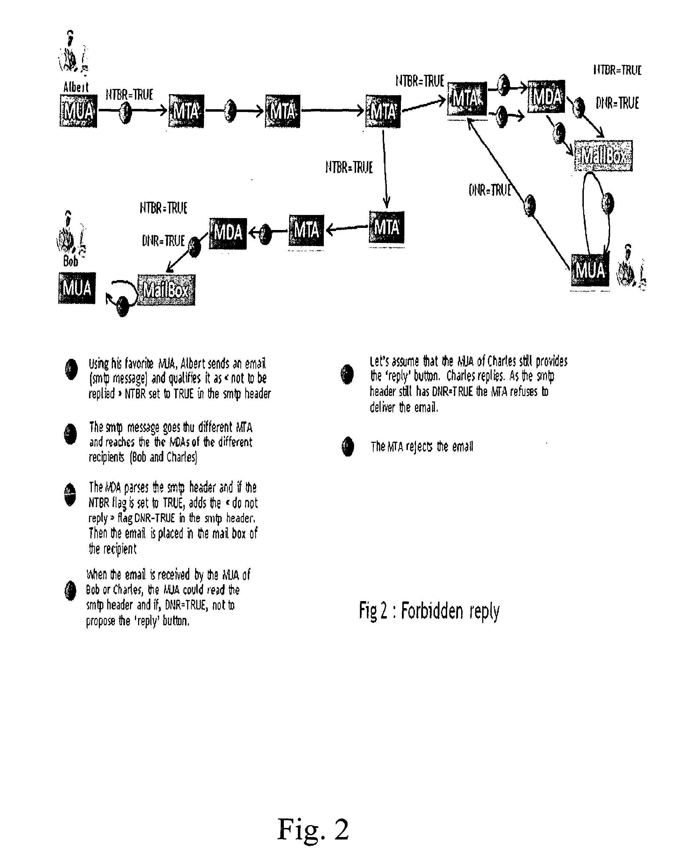

The invention, referring to figure 2, teaches a method to forbid an email from being replied to all.

The method teaches how to enrich the SMTP protocol so that the "Do not reply" information would be present in the SMTP message itself. New header tags are defined for this purpose.

Exactly the same approach is proposed for the "forbidden reply" feature than the above description of the method to forbid an email from being forwarded.

Two new tags are added in the SMTP header: NTBR (Not to replied) and DNR (Do not reply)

The present invention may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of automatically forbidding an electronic message sent by a user to recipients of said electronic message from being forwarded or replied to all recipients, said user and recipients being connected to a communication network through an electronic message server, said user using a software application managing electronic messages, said software application providing to the user a communication media, the method comprising the steps of,
- Displaying, by the electronic message User Agent of the software, of a button in order to activate the do not forward or do not reply all features,
- Adding, by the electronic message User Agent of the software, of an information related to the do not forward or do not reply all features, in the header of the electronic message,
- Sending, by the Mail Transfer Agent of the software, of the electronic message to the Mail Delivery Agent of the software
- If a recipient requests to forward or reply to all other recipients, the Mail Transfer Agent rejects the request of the recipient.

2. A method according to claim 1, **characterized in that** the electronic message is an email.

3. A method according to claim 1 or 2, **characterized in that** the software application is an email client.

4. A computer program product comprising computer-executable instructions for performing a method when the program is run on a computer, said method of automatically forbidding an electronic message sent by a user to recipients of said electronic message from being forwarded or replied to all recipients, said user and recipients being connected to a communication network through an electronic message server, said user using a software application managing electronic messages, said software application providing to the user a communication media, the method comprising the steps of,
- Displaying, by the electronic message User Agent of the software, of a button in order to activate the do not forward or do not reply all features,
- Adding, by the electronic message User Agent of the software, of an information related to the do not forward or do not reply all features, in the header of the electronic message,
- Sending, by the Mail Transfer Agent of the software, of the electronic message to the Mail Delivery Agent of the software
- If a recipient requests to forward or reply to all other recipients, the Mail Transfer Agent rejects the request of the recipient.

5. A device programmed or configured to perform a method, said method of automatically forbidding an electronic message sent by a user to recipients of said electronic message from being forwarded or replied to all recipients, said user and recipients being connected to a communication network through an electronic message server, said user using a software application managing electronic messages, said software application providing to the user a communication media, the method comprising the steps of,
- Displaying, by the electronic message User Agent of the software, of a button in order to activate the do not forward or do not reply all features,
- Adding, by the electronic message User Agent of the software, of an information related to the do not forward or do not reply all features, in the header of the electronic message,
- Sending, by the Mail Transfer Agent of the software, of the electronic message to the Mail Delivery Agent of the software
- If a recipient requests to forward or reply to all other recipients, the Mail Transfer Agent rejects the request of the recipient.
